# EUROPÄISCHE PATENTSCHRIFT

(11) **EP 2 411 251 B1**
(45) Veröffentlichungstag und Bekanntmachung des Hinweises auf die Patenterteilung: **05.03.2014**
(21) Anmeldenummer: 10720530.4
(22) Anmeldetag: 22.03.2010
(51) Int. Cl.: B60S 1/16, B60S 1/26

(54) **ELEKTROMOTORISCHER HILFSANTRIEB, INSBESONDERE WISCHERANTRIEB**
ELECTRIC-MOTOR AUXILIARY DRIVE, PARTICULARLY A WIPER DRIVE
ENTRAÎNEMENT AUXILIAIRE PAR MOTEUR ÉLECTRIQUE, NOTAMMENT ENTRAÎNEMENT D'ESSUIE-GLACE

(30) Priorität: 25.03.2009 DE 102009014312
(43) Veröffentlichungstag der Anmeldung: 01.02.2012
(73) Patentinhaber: Valeo Systèmes d'Essuyage, 78321 La Verrière (FR)
(72) Erfinder: STEFANI, Siegfried, 71739 Oberriexingen (DE)
(86) Internationale Anmeldenummer: PCT/EP2010/001783
(87) Internationale Veröffentlichungsnummer: WO 2010/108645

(56) Entgegenhaltungen:
- EP-A1- 0 792 779
- WO-A1-2004/026643
- DE-T2- 69 812 520
- US-A- 3 205 723
- US-A- 5 979 256

## Beschreibung

Die Erfindung bezieht sich auf einen elektromotorischen Hilfsantrieb gemäß Oberbegriff Patentanspruch 1 und dabei insbesondere auf einen Wischerantrieb bzw. Scheibenwischermotor.

Elektromotorische Hilfsantriebe für Fahrzeuge sind u.a. als Stellantriebe für unterschiedliche Anwendungen, insbesondere aber auch als Wischerantrieb oder - motor bekannt und bestehen grundsätzlich aus einem Elektromotor mit nachgeschaltetem bzw. angeflanschtem Getriebe, welches die Ausgangswelle des Hilfsantriebes bildet. Bekannt sind elektromotorische Hilfsantriebe, bei denen im Antriebsstrang zwischen dem Elektromotor bzw. der Welle des Elektromotors und der Ausgangswelle eine nach Art eines Schneckengetriebes ausgebildete Übersetzungs- oder Getriebestufe vorgesehen ist.

Bekannt ist weiterhin, Wischerantriebe oder -motoren so auszubilden, dass bei aktiviertem Antrieb die Abtriebs- oder Ausgangswelle des Getriebes reversierend, d.h. periodisch in unterschiedlichen Drehrichtungen angetrieben wird, und zwar entweder durch entsprechende Steuerung des Elektromotors mit einer elektrischen oder elektronischen Motorsteuerung des Hilfsantrieb oder durch entsprechende Ausbildung des Getriebes oder einer Getriebestufe als Koppelgetriebe (DE 101 49 218 A1).

Ein gattungsgemäßer elektromotorischer Hilfsantrieb ist aus dem Dokument US-3205723 bekannt.

Aufgabe der Erfindung ist es, einen elektromotorischen Hilfsantrieb aufzuzeigen, der bei kompakter Bauweise und verbesserter Energieeffizienz ein erhöhtes Drehmoment an seiner Abtriebs- oder Ausgangswelle bereitstellt. Zur Lösung dieser Aufgabe ist ein elektromotorischer Hilfsantrieb entsprechend dem Patentanspruch 1 ausgebildet.

Der erfindungsgemäße Hilfsantrieb ist beispielsweise ein Wischerantrieb odermotor und dabei ein reversierender Wischerantrieb bzw. -motor. Durch die im Antriebsstrang zusätzlich vorgesehene und Getriebegehäuse untergebrachte zweite Übersetzungs- oder Getriebestufe ergibt sich u.a. die Möglichkeit, ein erhöhtes Drehmoment an der Ausgangswelle des Hilfsantriebes bereitzustellen und/oder die Selbsthemmung des Getriebes, insbesondere auch bei Ausbildung der ersten Getriebestufe als schneckengetriebeartige Getriebestufe wesentlich zu verbessern.

Eine ausreichend hohe Selbsthemmung des Getriebes ist u.a. bei Ausbildung des Hilfsantriebes als Wischerantrieb oder -motor notwendig oder zumindest zweckmäßig, um zu vermeiden, dass ein beispielsweise in der Parkstellung befindlicher Wischarm bei hoher Fahrgeschwindigkeit oder in Autowaschanlagen durch angetriebene Reinigungselemente aus seiner Parkstellung weggedrückt und beschädigt wird.

Durch die zusätzliche zweite Getriebestufe ergibt sich weiterhin eine Verbesserung der Energieeffizienz, und zwar durch Erweiterung des Beschleunigungs- und Abbremsfensters des Elektromotors bei elektrisch gesteuerter reversierender Ausbildung des Hilfsantriebs.

Die zusätzliche zweite Getriebestufe, die als zahnradgetriebeartige Getriebestufe ausgeführt ist, kann zusammen mit den Getriebeelementen der ersten Getriebestufe in einer kompakten Bauweise realisiert werden, sodass das Getriebe insgesamt klein und kompakt baut und sich von Getrieben herkömmlicher elektromotorischer Hilfsantriebe, die nur eine von einem Schneckengetriebe gebildeten Getriebestufe aufweisen, in Bezug auf die Baugröße nur unwesentlich unterscheidet.

Das Drehmoment an der Ausgangswelle ist an die jeweiligen Bedürfnissen anpassbar, und zwar ohne Änderung des Getriebes und ohne Änderung des grundsätzlichen Aufbaus des Elektromotors. Die Anpassung erfolgt, sofern notwendig, durch Verwendung unterschiedlicher Motorkomponenten (wie Anker, Statormagnete bzw. Poltopf usw.). Durch die Anpassung besteht die Möglichkeit, den Wischerantrieb oder -motor in einer Scheibenwischanlage entweder zum direkten Antrieb eines Wischhebels oder Wischarms oder aber zum Antrieb von zwei Wischhebeln oder Wischarmen über eine zusätzliche Getriebeanordnung (z.B. Hebelgetriebe) zu verwenden.

Die Getriebeelemente der zusätzlichen zweiten Getriebestufe, aber auch des Getriebes insgesamt können kostengünstig als einfache Bauteile gefertigt werden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine Draufsicht auf die Rückseite eines als Wischerantrieb oder -motor ausgebildeten elektromotorischen Hilfsantrieb gemäß der Erfindung;
- Fig. 2: in einer perspektivischen Explosionsdarstellung die wesentlichen Elemente des Wischerantriebs;
- Fig. 3: eine Darstellung ähnlich Figur 1, jedoch bei abgenommenem Getriebegehäusedeckel;
- Fig. 4: einen Schnitt entsprechend der Linie I - I der Figur 3;
- Fig. 5: in vereinfachter Darstellung die wesentlichen Elemente eines Wischerantriebs oder- motors gemäß einer weiteren Ausführungsform der Erfindung;
- Fig. 6: einen Schnitt entsprechend der Linie A - A der Figur 5.

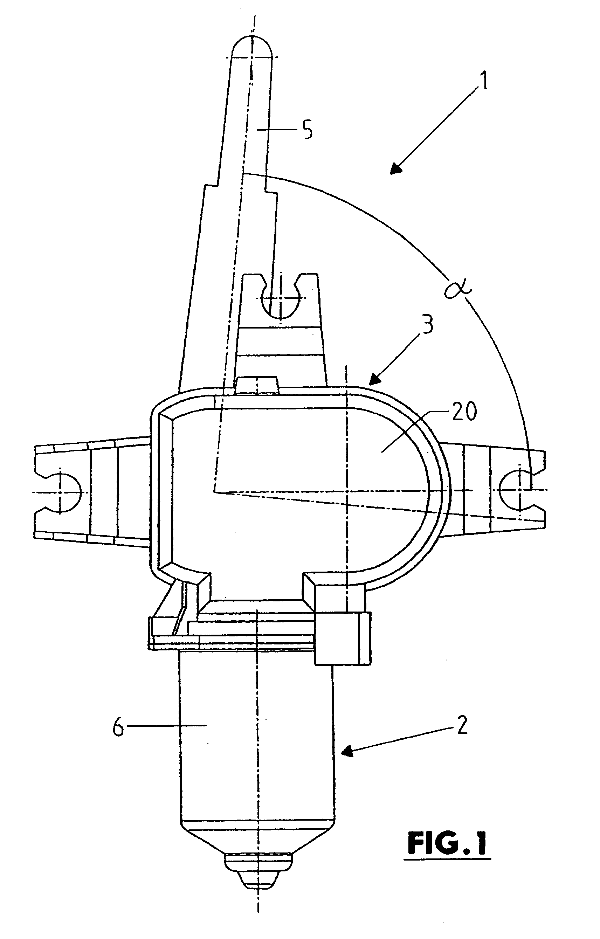

Der in den Figuren allgemein mit 1 bezeichnete elektromotorische Wischerantrieb umfasst in an sich bekannter Weise einen Elektromotor 2 und ein Getriebe 3. Bei der dargestellten Ausführungsform bildet die Abtriebs- oder Ausgangswelle 4 des Getriebes 3 die Wischerwelle, auf der der in der Figur 1 angedeutete Wischarm 5 für ein nicht dargestelltes Wischblatt einer Scheibenwischanlage beispielsweise für eine Fahrzeugheckscheibe in geeigneter Weise befestigt ist.

Der Wischerantrieb 1 ist als elektrisch gesteuerter reversierender Antrieb ausgebildet, d.h. als Antrieb, bei dem während des Betriebes durch eine gesteuerte periodische Änderung der Drehrichtung des Elektromotors 2 die Ausgangswelle 4 und der dortige Wischarm 5 periodisch über einen dem Wischwinkel der Scheibenwischanlage entsprechenden Winkelbereich α hin- und hergeschwenkt werden.

Der Elektromotor 2 umfasst u.a. eine in einem kappenartigen Motorgehäuse 6 mit einem Ende drehbar gelagerte Ankerwelle 7, auf der der Motoranker 8 sowie ein mit Bürsten an einer Bürstenplatte 9 zusammenwirkender Kommutator 10 vorgesehen sind. Mit ihren anderen Ende reicht die Ankerwelle 5 in das Getriebegehäuse 11 des Getriebes 3 hinein und ist in diesem Gehäuse drehbar gelagert, und zwar am Übergang zwischen dem Motorgehäuse 6 und dem Getriebegehäuse 11, d.h. dort, wo das Motorgehäuse 6 am Getriebegehäuse 11 angeflanscht ist.

Das Getriebegehäuse 11, welches ebenso wie das Motorgehäuse 6 aus einem metallischen Werkstoff gefertigt ist, ist wannenartig ausgebildet, und zwar im Wesentlichen bestehend aus einem Gehäuseboden 11.1 und einer den Innenraum des Getriebegehäuses 11 umschließenden Umfangswand 11.2 mit Flanschabschnitt 11.3 zum Anflanschen des Motorgehäuses 6.

Auf einer in dem Getriebegehäuse 11 aufgenommenen Teillänge ist die Ankerwelle 7 als Schnecke 7.1 ausgebildet, die mit der Verzahnung 12.1 eines Schnecken-oder Getrieberades 12 zusammenwirkt, welches (Getrieberad) zusammen mit der Schnecke 7.1 eine erste Übersetzungs- und Getriebestufe 13 im Inneren des Getriebegehäuses 11 bildet. Das Getrieberad 12 ist auf einer Welle 14 angeordnet, die in einem Lagerabschnitt 11.1.1 am Gehäuseboden 11.1 mit einem Gleitlager 14.1 frei drehbar gelagert ist, und zwar um eine Achse senkrecht zur Achse der Ankerwelle 7 und parallel zur Achse der Ausgangswelle 4.

Auf der dem Gehäuseboden 11.1 abgewandten Seite des Getrieberads 12 ist ein weiteres als Zahnrad ausgebildetes Getrieberad 15 vorgesehen, und zwar achsgleich mit der Achse des Getrieberades 12. Das Getrieberad 15, welches einen gegenüber dem Getrieberad 12 reduzierten Außendurchmesser aufweist, ist antriebsmäßig mit dem Getrieberad 12 verbunden, beispielsweise sind die Getrieberäder 12 und 15 einstückig aus einem geeigneten Werkstoff, beispielsweise aus einem metallischen Werkstoff oder aus einem geeigneten Kunststoff hergestellt.

Auf der Ausgangswelle 4, die ebenfalls am Gehäuseboden 11.1 bzw. an einem dortigen Lagerabschnitt 11.1.2 mittels Gleitlager 4.1 dreh- bzw. schwenkbar gelagert ist, ist im Inneren des Gehäuses 11 ein mit dem Getrieberad 15 zusammenwirkendes Zahnrad- oder Getrieberadsegment 16 vorgesehen, dessen Verzahnung 16.1 in die Verzahnung 15.1 des Getrieberades 15 eingreift. Das Getrieberad 15 und das Getrieberadsegment 16 bilden eine zweite zusätzliche Übersetzungs- und Getriebestufe 17.

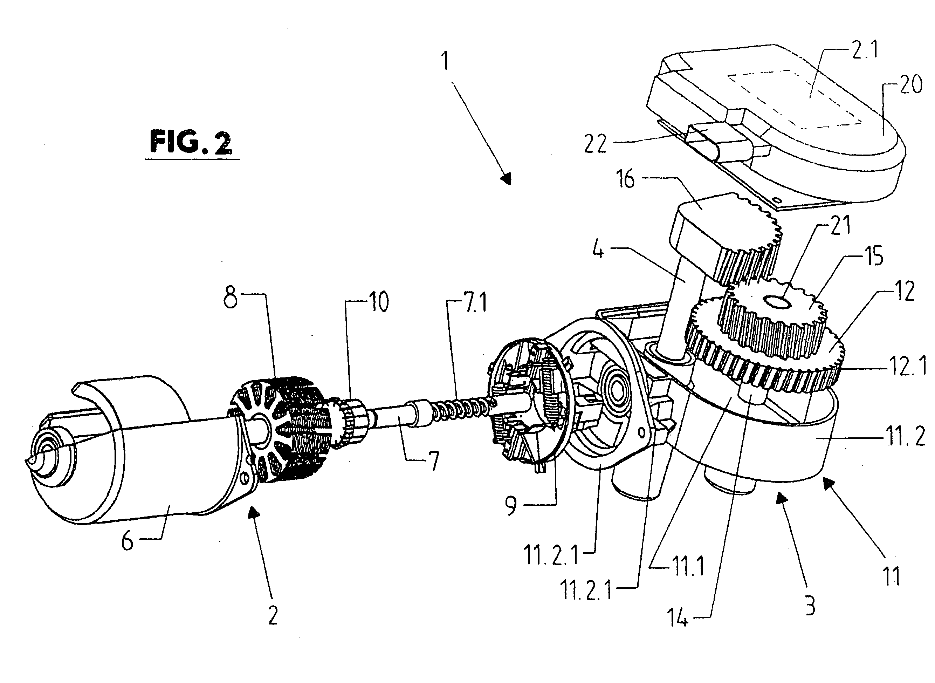

Das Getrieberadsegment 16 besitzt zwei in etwa radial zur Achse der Ausgangswelle 4 orientierte Flächen 18, deren Winkelabstand gleich oder etwas größer als der Wischwinkel α ist. Die Anordnung des Getriebesegmentes 16 innerhalb des Getriebegehäuses 11 ist so getroffen, dass die Flächen 18 jeweils gegen eine Gegenfläche innerhalb des Getriebegehäuses 11, d.h. bei der dargestellten Ausführungsform gegen ein an der Innenfläche der Gehäuseumfangswand 11.2 vorgesehenes Gummipuffer 19 zur Anlage kommen, falls aufgrund einer Störung in der elektronischen Steuerung des Elektromotors 2 oder Motorsteuerung 2.1, die in der Figur 2 mit unterbrochenen Linien angedeutet ist, ein Umschalten der Drehrichtung des Elektromotors 2 bei Erreichen einer der beiden den Wischwinkel α definierenden Winkelendstellungen nicht erfolgt.

Die Übersetzung der Getriebestufe 17 ist durch entsprechende Wahl der wirksamen Radien des Getrieberades 15 und des Getriebesegmentes 16 so gewählt, dass die Übersetzung kleiner als Eins ist, d.h. eine Drehbewegung des Getrieberades 15 um einen Drehwinkel zu einer Dreh- oder Schwenkbewegung des Getriebesegmentes 16 mit einem kleineren Drehwinkel führt. Bei der dargestellten Ausführungsform beträgt das Übersetzungsverhältnis der zusätzlichen Getriebestufe 17 etwa 0,6 und 0,7.

Die gemeinsame Achse der beiden Getrieberäder 12 und 15 und die Achse der Ausgangswelle 4 liegen in einer gemeinsamen Ebene E. Die Achse der Ankerwelle 7 und damit auch die Achse der Schnecke 7.1 sind senkrecht zu dieser Ebene E orientiert.

Im fertig montiertem Zustand des Wischerantriebs 1 ist das Getriebegehäuse 11 an seiner offenen Seite durch einen Deckel 20 dicht verschlossen. An der Innenseite dieses Deckels ist die Steuerelektronik oder Motorsteuerung 2.1 zur Steuerung des Elektromotors 2, insbesondere auch zur Steuerung der reversierenden Drehbewegung des Elektromotors 2 bzw. der Ankerwelle 7 durch Umpolen der am Elektromotor 2 anliegenden Gleichspannung vorgesehen.

Mit wenigstens einem Sensor der Motorsteuerung 2.1 werden die Drehstellung des Getrieberades 15 und damit die Dreh- oder Schwenkstellung der Ausgangswelle 4 überwacht und zumindest das Umschalten der Drehrichtung des Elektromotors 2 jeweils bei Erreichen der Endpositionen des Wischwinkels α veranlasst. Bei der dargestellten Ausführungsform ist am Getrieberad 15 ein als Permanentmagnet ausgebildeter Positionsmagnet 21 vorgesehen, der mit einem auf das Magnetfeld dieses Magneten ansprechenden Sensor, beispielsweise Hallsensor der Motorsteuerung 2.1 zusammenwirkt. An der Außenseite des Deckels 20 ist ein Mehrfachanschluss oder -stecker 22 vorgesehen, und zwar zum Anschließen des Wischerantriebs 1 an fahrzeugseitige elektrische Versorgungs- und Steuerleitungen.

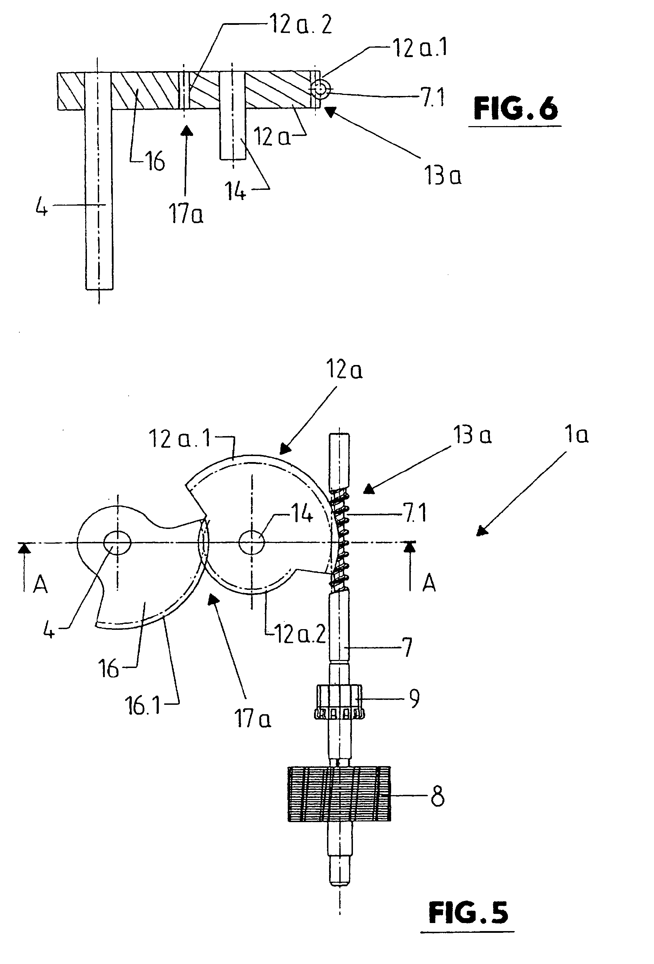

Die Figuren 5 und 6 zeigen als weitere Ausführungsform einen Wischerantrieb 1a, von dem lediglich die wesentlichen Funktionselemente darstellt sind, nämlich u.a. die Ankerwelle 7 mit Motoranker 8 und Kommutator 9 und die an der Ankerwelle 7 ausgebildete Schnecke 7.1, welche zusammen mit dem Schnecken- oder Getrieberad 12a die erste Getriebestufe 13a bildet. Das Getriebe 3a des Wischerantriebs 1a unterscheidet sich von dem Getriebe 3 im Wesentlichen dadurch, dass das Getrieberad 12a der ersten Getriebestufe 13a an seinem mit der Schnecke 7.1 zusammenwirkenden Abschnitt 12a.1 bzw. an der dortigen Verzahnung als Getrieberadsegment ausgeführt ist und zugleich Bestandteil der zweiten Getriebestufe 17a ist, d.h. mit einem als Getrieberadsegment ausgebildeten Abschnitt 12a.2 bzw. mit einer dortigen zweiten Verzahnung mit der Verzahnung 16.1 des Getrieberadsegmentes 16 an der Ausgangswelle 4 zusammenwirkt. Das Zahnrad oder Getrieberad 15 ist somit entfallen.

Die segmentförmigen Abschnitte 12a.1 und 12a.2 liegen sich bezogen auf die Achse des Getrieberades 12a diametral gegenüber. Weiterhin liegen die Abschnitte 12a.1 und 12a.2 bei der dargestellten Ausführungsform mit ihren senkrecht zur Achse des Getrieberades 12a orientierten Stirnseiten in gemeinsamen Ebenen. Der Radius des Abschnitts 12a.1 bzw. der dortigen Verzahnung ist größer als der Radius des Abschnitts 12a.2 bzw. der dortigen Verzahnung. Durch die Verwendung des Getrieberades 12a wird eine weitere Reduzierung des Bauraumes oder -volumens für das Getriebe 3a erreicht, insbesondere auch in der Achsrichtung der Ausgangswelle 4.

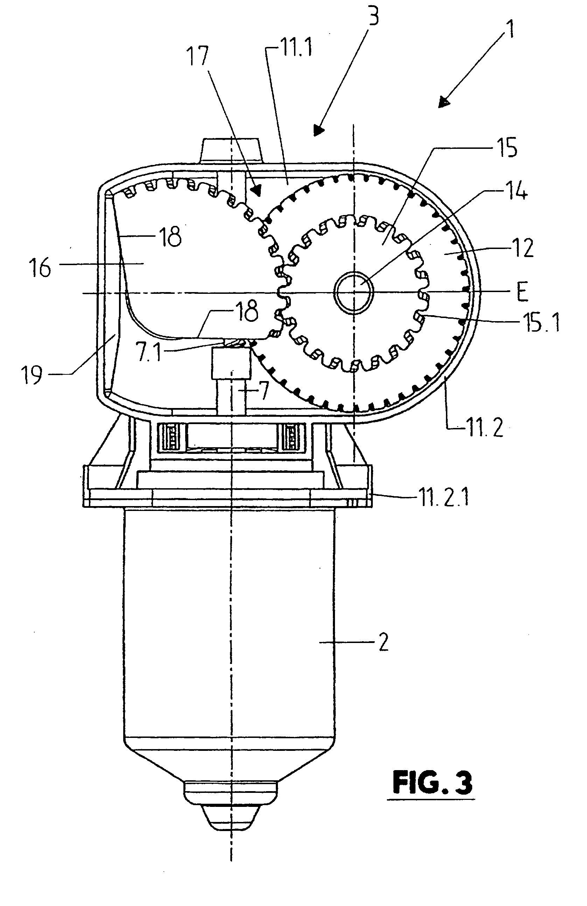

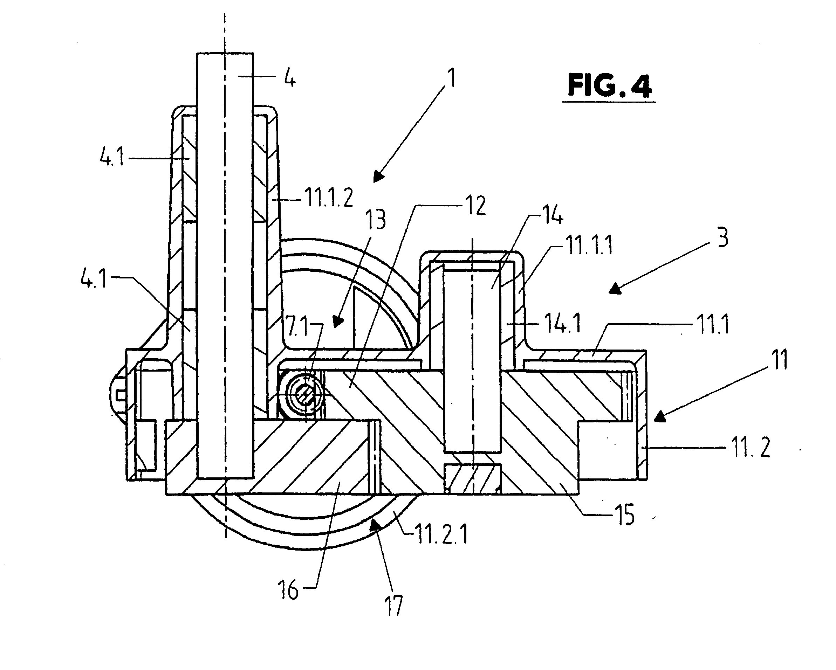

Der Vorteil des Wischerantriebs 1 bzw. 1 a mit der zusätzlichen Übersetzungs- oder Getriebestufe 17 bzw. 17a sind bei kompakter Bauweise und reduziertem Bauraum für das Getriebe 3 bzw. 3a u.a.:
➢ Durch die zusätzliche Übersetzungs- oder Getriebestufe 17 bzw. 17a ergibt sich bei gleichem Drehmoment des Elektromotors 2 im Vergleich zu Wischerantrieben, die zusätzliche Übersetzungs- oder Getriebestufe 17 nicht aufweisen, ein erhöhtes Drehmoment an der Ausgangswelle 4.
➢ Durch die Anordnung der Ankerwelle 7 bzw. des die Schnecke 7.1 bildenden Abschnitts dieser Ankerwelle zwischen dem Getrieberad 12 bzw. 12a und der Ausgangswelle 4 bzw. dem am Getriebegehäuseboden 11.1 gebildeten Lagerabschnitt 11.1.2 sowie durch die Ausbildung des an der Ausgangswelle 4 vorgesehenen Getriebeelementes 16 als Zahnradsegment ergibt sich für das Getriebe 3 bzw. 3a trotz der zusätzlichen Getriebestufe 17 bzw. 17a eine äußerst kompakte Bauweise mit kleinem Bauraum.
➢ Die Anordnung des Getrieberadsegmentes 16 in der Weise, dass es bei dem Getriebe 3 das größere Getrieberad 12 teilweise überlappt (Figuren 3 und 4), sowie die spezielle Ausbildung des Getrieberad 12a und der Wegfall des Getrieberades 15 bei dem Getriebes 3a tragen entscheidend zur Reduzierung der Baugröße des Getriebes 3 bzw. 3a bei.
➢ Durch die zusätzliche Getriebestufe 17 bzw. 17a wird weiterhin die Selbsthemmung der Ausgangswelle 4 verbessert.
➢ Die Getrieberäder oder -elemente 12, 12a 15 und 16 können als relativ einfache Bauteile preiswert gefertigt werden.

So wurde vorstehend davon ausgegangen, dass die Ausgangswelle 4 des Wischerantriebs als Wischerwelle dient, an der unmittelbar der Wischarm 5 einer Scheibenwischanlage befestigt ist. Selbstverständlich ist der Wischerantrieb 1 auch bei Scheibenwischanlagen verwendbar, bei denen die Ausgangswelle 4 über beispielsweise ein Hebelgetriebe antriebsmäßig mit einem oder aber mehreren Wischarmen einer Scheibenwischanlage verbunden ist.

### Bezugszeichenliste

- 1, 1a: Wischerantrieb
- 2: Elektromotor
- 2.1: Motorsteuerung
- 3, 3a: Getriebe
- 4: Ausgangswelle des Getriebes 3
- 4.1: Gleitlager
- 5: Wischarm
- 6: Motorgehäuse
- 7: Ankerwelle
- 7.1: Schnecke
- 8: Motoranker
- 9: Bürstenplatte
- 10: Kommutator
- 11: Getriebegehäuse
- 11.1: Boden des Getriebegehäuses 11
- 11.1.1: Lagerabschnitt für zusätzliche Welle 14
- 11.2: Umfangswand des schalenartigen Getriebegehäuses
- 11.1.2: Lagerabschnitt für Ausgangswelle 4
- 11.2.1: Flansch
- 12, 12a: Getrieberad
- 12.1: Verzahnung
- 12a.1, 12a.2: Abschnitt des Getrieberades 12a
- 13, 13a: Getriebestufe
- 14: Welle
- 14.1: Gleitlager
- 15: Getrieberad
- 15.1: Verzahnung
- 16: Getrieberadsegment
- 16.1: Verzahnung
- 17, 17a: Getriebestufe
- 18: Stirnfläche
- 19: Gummipuffer
- 20: Gehäusedeckel
- 21: Positionsmagnet
- 22: Mehrfachanschluss bzw. Mehrfachanschlussstecker am Deckel 20
- α: Dreh- oder Schwenkwinkel der Ausgangswelle 4
- E: Ebene der Achsen der Wellen 4 und 14

## Patentansprüche

1. Elektromotorischer Hilfsantrieb, insbesondere Wischerantrieb, mit einem Elektromotor (2) und mit einem nachgeschalteten, eine Ausgangswelle (4) des Hilfsantriebs bildenden Getriebe (3, 3a), welches in einem Antriebsstrang zwischen dem Elektromotor (2) und der Ausgangswelle (4) wenigstens zwei in Serie angeordnete Getriebestufen (13, 13a, 17, 17a) aufweist, von denen eine erste Getriebestufe (13, 13a) nach Art eines Schneckengetriebes bestehend aus einer Schnecke (7.1) und aus einem mit dieser Schnecke (7.1) zusammenwirkenden schneckenradartigen Getriebeelement (12, 12a) ausgebildet ist, wobei wenigstens eine zweite, im Antriebsstrang vorgesehene Getriebestufe (17, 17a) nach Art eines Zahnradgetriebes ausgeführt ist,
**dadurch gekennzeichnet, dass**
der Hilfsantrieb für eine reversierende Schwenk- oder Drehbewegung der Ausgangswelle (4) mit periodisch sich ändernder Drehrichtung des Elektromotors (2) ausgebildet ist, und dass an einem Getriebeelement der zweiten Getriebestufe (17, 17a), an dem auf der Ausgangswelle (4) angeordneten Getriebeelement (16) der zweiten Getriebestufe (17, 17a) wenigstens ein Anschlag (18) vorgesehen ist, der bei einem Versagen oder Fehlverhalten der Motorsteuerung (2.1) des reversierenden Hilfsantriebs durch Anschlagen gegen wenigstens eine am Getriebegehäuse (10) vorgesehene, vorzugsweise elastische Gegenfläche (19) die Schwenkbewegung der Ausgangswelle (4) zwangsweise beendet.

2. Hilfsantrieb nach Anspruch 1, **dadurch gekennzeichnet, dass** die zweite Getriebestufe im Antriebsstrang zwischen der ersten Getriebestufe (13, 13a) und der Ausgangswelle (4) vorgesehen ist.

3. Hilfsantrieb nach Anspruch 1 oder 2, **dadurch gekennzeichnet, dass** die zweite Getriebestufe (17) aus zwei Getriebeelementen (12a, 15, 16) besteht.

4. Hilfsantrieb nach Anspruch 3, **dadurch gekennzeichnet, dass** ein Getriebeelement (16) der zweiten Getriebestufe (17, 17a) auf der Ausgangswelle (4) angeordnet ist.

5. Hilfsantrieb nach einem der vorhergehenden Ansprüche, **dadurch gekennzeichnet, dass** das schneckenradartige Getriebeelement (12) der ersten Getriebestufe (13) und ein zahnradartiges Getriebeelement (15) der zweiten Getriebestufe (17) zumindest antriebsmäßig miteinander verbunden um eine
gemeinsame Achse (14) in einem Getriebegehäuse (11) drehbar gelagert sind.

6. Hilfsantrieb nach einem der vorhergehenden Ansprüche, **dadurch gekennzeichnet, dass** das schneckenradartige Getriebeelement (12, 12a) der ersten Getriebestufe (13, 13a) zugleich auch Getriebeelement der zweiten Getriebestufe (17, 17a) ist und hierfür an einem ersten Abschnitt (12.1, 12a.1) für ein Zusammenwirken mit der Schnecke (7.1) und an wenigsten einem zweiten Abschnitt (15, 12a.2) für ein Zusammenwirken mit einem Getriebeelement (16) der zweiten Getriebestufe (17, 17a) ausgebildet ist.

7. Hilfsantrieb nach Anspruch 6, **dadurch gekennzeichnet, dass** das schneckenradartige Getriebeelement (12) der ersten Getriebestufe (13) und das achsgleich mit diesem angeordnete zahnradartige Getriebeelement (15) der zweiten Getriebestufe (17) zu einer Einheit verbunden oder einstückig hergestellt sind.

8. Hilfsantrieb nach einem der vorhergehenden Ansprüche, **dadurch gekennzeichnet, dass** das schneckenradartige Getriebeelement (12) der ersten Getriebestufe (13) und das antriebsmäßig mit diesem verbundene Getriebeelement (15) der zweiten Getriebestufe (17) oder der erste Abschnitt (12.1, 12a.1) und der zweite Abschnitt (15, 12a.2) des schneckenradartigen Getriebeelementes (12a) einen unterschiedlichen Durchmesser oder Radius aufweisen, beispielsweise derart, dass das schneckenradartige Getriebeelement (12) einen größeren Durchmesser oder Radius besitzt als das achsgleich mit diesem Getriebeelement (12) angeordnete Getriebeelement (15) der zweiten Getriebestufe oder dass der erste Abschnitt (12a.1) des schneckenradartigen Getriebeelementes (12a) einen größeren Durchmesser oder Radius besitzt als der zweite Abschnitt (12a.2).

9. Hilfsantrieb nach einem der vorhergehenden Ansprüche, **dadurch gekennzeichnet, dass** das Übersetzungsverhältnis der zweiten Getriebestufe (17) kleiner als 1 ist, vorzugsweise im Bereich zwischen 0,6 und 0,7 liegt.

10. Hilfsantrieb nach einem der vorhergehenden Ansprüche, **dadurch gekennzeichnet, dass** wenigstens ein Getriebeelement (12a, 16) der ersten und/oder zweiten Getriebestufe (13a, 17, 17a) segmentförmig ausgebildet ist.

11. Hilfsantrieb nach Anspruch 10, **dadurch gekennzeichnet, dass** das mit der Schnecke (7.1) zusammenwirkende Getriebeelement (12a) der ersten Getriebestufe (13a) und/oder das am Ausgang der zweiten Getriebestufe (17) vorgesehene Getriebeelement (16) und/oder das Getriebeelement (12a) der zweiten Getriebestufe (17a), welches mit dem Getriebeelement (16) am Ausgang dieser Getriebestufe (17a) zusammenwirkt, segmentförmig ausgebildet sind.

12. Hilfsantrieb nach einem der vorhergehenden Ansprüche, **dadurch gekennzeichnet, dass** die Achse des schneckenradartigen Getriebeelementes (12, 12a) parallel zu und im Abstand von der Achse der Ausgangswelle (4) angeordnet ist, und dass die Schnecke (7.1) der ersten Getriebestufe (13, 13a) oder die diese Schnecke (7.1) aufweisende Teillänge der Ankerwelle (7) des Elektromotors (2) zwischen der Ausgangswelle (4) oder einem am Getriebegehäuse (11) gebildeten Lagerabschnitt (11.1.1) für die Ausgangswelle (4) und dem schneckenradartigen Getriebeelement (12, 12a) der ersten Getriebestufe (13, 13a) angeordnet ist.

13. Hilfsantrieb nach einem der vorhergehenden Ansprüche, **dadurch gekennzeichnet, dass** die Schnecke (7.1) der ersten Getriebestufe (13, 13a) oder eine diese Schnecke aufweisende Teillänge der Ankerwelle (7) mit ihrer
Längserstreckung senkrecht oder im Wesentlichen senkrecht zu einer Ebene (E) orientiert ist, die die Achse der Ausgangswelle (4) sowie auch die Achse des schneckenradartigen Getriebeelementes (12, 12a) der ersten Getriebestufe (13, 13a) einschließt.

14. Hilfsantrieb nach einem der vorhergehenden Ansprüche, **dadurch gekennzeichnet, dass** ein Getriebeelement (16) der zweiten Getriebestufe (17) das schneckenradartige Getriebeelement (12) der ersten Getriebestufe (13) teilweise überlappt.

15. Hilfsantrieb nach einem der vorhergehenden Ansprüche, **dadurch gekennzeichnet, dass** die Ausgangswelle (4) sowie das schneckenradartige Getriebeelement (12, 12a) der ersten Getriebestufe (13, 13a) und die Getriebeelemente (12a, 15, 16) der zweiten Getriebestufe (17, 17a) an einem Boden (11.1) des wannen- oder halbschalenartig ausgebildeten Getriebegehäuses (11) gelagert sind.

16. Hilfsantrieb nach einem der vorhergehenden Ansprüche, **dadurch gekennzeichnet, dass** an einem Getriebeelement (15), beispielsweise an dem achsgleich mit dem schneckenradartigen Getriebeelement (12) angeordneten Getriebeelement (15) der zweiten Getriebestufe (17) wenigstens ein mit der elektrischen oder elektronischen Motorsteuerung (2.1) zusammenwirkendes Steuerelement zur Steuerung des Elektromotors (2) in Abhängigkeit von der Dreh- oder Schwenkstellung des Getriebeelementes (15)vorgesehen ist, z.B. in Form eines Permanentmagneten (21) und/oder in Form einer Permanentmagnetanordnung und/oder in Form von Steuernocken und/oder Kurven.

17. Hilfsantrieb nach einem der vorhergehenden Ansprüche, **dadurch gekennzeichnet, dass** das Motorgehäuse (11) an seiner dem Gehäuseboden (11.1) gegenüberliegenden Gehäuseseite durch einen Gehäusedeckel (20) verschlossen ist, und das am Gehäusedeckel (20) die elektrische oder elektronische Motorsteuerung (2.1) vorgesehen ist.

## Claims

1. Electric-motor auxiliary drive, particularly a wiper drive, with an electric motor (2) and a gearing (3, 3a) which is connected downstream, forms an output shaft (4) of the auxiliary drive and, in a drive train between the electric motor (2) and the output shaft (4), has at least two gearing stages (13, 13a, 17, 17a) which are arranged in series and of which a first gearing stage (13, 13a) is designed in the manner of a worm gearing, consisting of a worm (7.1) and of a worm-wheel-like gearing element (12, 12a) interacting with said worm (7.1), wherein at least one second gearing stage (17, 17a) provided in the drive train is designed in the manner of a toothed gearing, **characterized in that** the auxiliary drive is designed for a reversing pivoting or rotational movement of the output shaft (4) with a periodically changing direction of rotation of the electric motor (2), and **in that** at least one stop (18) is provided on one gearing element of the second gearing stage (17, 17a), on that gearing element (16) of the second gearing stage (17, 17a) that is arranged on the output shaft (4), which stop, in the event of a failure or defective behaviour of the motor control system (2.1) of the reversing auxiliary drive, forcibly ends the pivoting movement of the output shaft (4) by striking against at least one preferably elastic counter surface (19) provided on the gearing housing (10).

2. Auxiliary drive according to Claim 1, **characterized in that** the second gearing stage is provided in the drive train between the first gearing stage (13, 13a) and the output shaft (4).

3. Auxiliary drive according to Claim 1 or 2, **characterized in that** the second gearing stage (17) consists of two gearing elements (12a, 15, 16).

4. Auxiliary drive according to Claim 3, **characterized in that** one gearing element (16) of the second gearing stage (17, 17a) is arranged on the output shaft (4).

5. Auxiliary drive according to one of the preceding claims, **characterized in that** the worm-wheel-like gearing element (12) of the first gearing stage (13) and a toothed-wheel-like gearing element (15) of the second gearing stage (17), connected to each other at least in terms of drive, are mounted rotatably about a common axis (14) in a gearing housing (11).

6. Auxiliary drive according to one of the preceding claims, **characterized in that** the worm-wheel-like gearing element (12, 12a) of the first gearing stage (13, 13a) is at the same time also the gearing element of the second gearing stage (17, 17a) and, for this purpose, is formed on a first section (12.1, 12a.1) for interaction with the worm (7.1) and on at least one second section (15, 12a.2) for interaction with a gearing element (16) of the second gearing stage (17, 17a).

7. Auxiliary drive according to Claim 6, **characterized in that** the worm-wheel-like gearing element (12) of the first gearing stage (13) and the toothed-wheel-like gearing element (15) of the second gearing stage (17), which gearing element is arranged on the same axis as the worm-wheel-like gearing element, are connected to form a unit or are produced as one piece.

8. Auxiliary drive according to one of the preceding claims, **characterized in that** the worm-wheel-like gearing element (12) of the first gearing stage (13) and the gearing element (15) of the second gearing stage (17), which gearing element is connected to said worm-wheel-like gearing element in terms of drive, or the first section (12.1, 12a.1) and the second section (15, 12a.2) of the worm-wheel-like gearing element (12a) have a different diameter or radius, for example in such a manner that the worm-wheel-like gearing element (12) has a larger diameter or radius than the gearing element (15) of the second gearing stage, which gearing element is arranged on the same axis as said worm-wheel-like gearing element (12), or in that the first section (12a.1) of the worm-wheel-like gearing element (12a) has a larger diameter or radius than the second section (12a.2).

9. Auxiliary drive according to one of the preceding claims, **characterized in that** the transmission ratio of the second gearing stage (17) is smaller than 1, and is preferably within the range between 0.6 and 0.7.

10. Auxiliary drive according to one of the preceding claims, **characterized in that** at least one gearing element (12a, 16) of the first and/or second gearing stage (13a, 17, 17a) is of segmental design.

11. Auxiliary drive according to Claim 10, **characterized in that** the gearing element (12a) of the first gearing stage (13a), which gearing element interacts with the worm (7.1), and/or the gearing element (16) provided at the output of the second gearing stage (17) and/or the gearing element (12a) of the second gearing stage (17a), which gearing element interacts with the gearing element (16) at the output of said gearing stage (17a), are/is of segmental design.

12. Auxiliary drive according to one of the preceding claims, **characterized in that** the axis of the worm-wheel-like gearing element (12, 12a) is arranged parallel to and at a distance from the axis of the output shaft (4), and **in that** the worm (7.1) of the first gearing stage (13, 13a) or the partial length, which has said worm (7.1), of the armature shaft (7) of the electric motor (2) is arranged between the output shaft (4) or a bearing section (11.1.1), which is formed on the gearing housing (11), for the output shaft (4) and the worm-wheel-like gearing element (12, 12a) of the first gearing stage (13, 13a).

13. Auxiliary drive according to one of the preceding claims, **characterized in that** the worm (7.1) of the first gearing stage (13, 13a) or a partial length, having said worm, of the armature shaft (7) is oriented with the longitudinal extent thereof perpendicular to or substantially perpendicular to a plane (E) which encloses the axis of the output shaft (4) and also the axis of the worm-wheel-like gearing element (12, 12a) of the first gearing stage (13, 13a).

14. Auxiliary drive according to one of the preceding claims, **characterized in that** a gearing element (16) of the second gearing stage (17) partially overlaps the worm-wheel-like gearing element (12) of the first gearing stage (13).

15. Auxiliary drive according to one of the preceding claims, **characterized in that** the output shaft (4) and the worm-wheel-like gearing element (12, 12a) of the first gearing stage (13, 13a) and the gearing elements (12a, 15, 16) of the second gearing stage (17, 17a) are mounted on a base (11.1) of the gearing housing (11) which is designed in the manner of a trough or half shell.

16. Auxiliary drive according to one of the preceding claims, **characterized in that** at least one control element which interacts with the electric or electronic motor control system (2.1) and is intended for controlling the electric motor (2) depending on the rotational or pivoting position of the gearing element (15) is provided on a gearing element (15), for example on the gearing element (15) of the second gearing stage (17), which gearing element is arranged on the same axis as the worm-wheel-like gearing element (12), which control element is, for example, in the form of a permanent magnet (21) and/or in the form of a permanent magnet arrangement and/or in the form of control cams and/or cam discs.

17. Auxiliary drive according to one of the preceding claims, **characterized in that** the motor housing (11) is closed on its housing side opposite the housing base (11.1) by a housing cover (20), and **in that** the electric or electronic motor control system (2.1) is provided on the housing cover (20).

## Revendications

1. Entraînement auxiliaire par moteur électrique, en particulier entraînement d'essuie-glace, comprenant un moteur électrique (2) et une transmission (3, 3a) montée en aval, formant un arbre de sortie (4) de l'entraînement auxiliaire, laquelle présente, dans une chaîne cinématique entre le moteur électrique (2) et l'arbre de sortie (4), au moins deux étages de transmission disposés en série (13, 13a, 17, 17a), dont un premier étage de transmission (13, 13a) est réalisé à la manière d'un engrenage à vis sans fin constitué d'une vis sans fin (7.1) et d'un élément de transmission de type roue à denture hélicoïdale (12, 12a) coopérant avec cette vis sans fin (7.1), au moins un deuxième étage de transmission (17, 17a) prévu dans la chaîne cinématique étant réalisé à la manière d'une transmission à roue dentée,
**caractérisé en ce que**
l'entraînement auxiliaire est réalisé pour produire un mouvement de pivotement ou de rotation réversible de l'arbre de sortie (4) avec un sens de rotation du moteur électrique (2) variant périodiquement, et **en ce qu'**au moins une butée (18) est prévue sur un élément de transmission du deuxième étage de transmission (17, 17a), sur l'élément de transmission (16) du deuxième étage de transmission (17, 17a) disposé sur l'arbre de sortie (4), laquelle butée, en cas de défaillance ou de mauvais fonctionnement de la commande du moteur (2.1) de l'entraînement auxiliaire réversible, termine obligatoirement le mouvement de pivotement de l'arbre de sortie (4), en butant contre au moins une surface conjuguée (19) de préférence élastique prévue sur le boîtier de transmission (10).

2. Entraînement auxiliaire selon la revendication 1, **caractérisé en ce que** le deuxième étage de transmission est prévu dans la chaîne cinématique entre le premier étage de transmission (13, 13a) et l'arbre de sortie (4).

3. Entraînement auxiliaire selon la revendication 1 ou 2, **caractérisé en ce que** le deuxième étage de transmission (17) se compose de deux éléments de transmission (12a, 15, 16).

4. Entraînement auxiliaire selon la revendication 3, **caractérisé en ce qu'**un élément de transmission (16) du deuxième étage de transmission (17, 17a) est disposé sur l'arbre de sortie (4).

5. Entraînement auxiliaire selon l'une quelconque des revendications précédentes, **caractérisé en ce que** l'élément de transmission de type roue à denture hélicoïdale (12) du premier étage de transmission (13) et un élément de transmission de type roue dentée (15) du deuxième étage de transmission (17) sont connectés l'un à l'autre au moins par entraînement et sont montés à rotation autour d'un axe commun (14) dans un boîtier de transmission (11).

6. Entraînement auxiliaire selon l'une quelconque des revendications précédentes, **caractérisé en ce que** l'élément de transmission de type roue à denture hélicoïdale (12, 12a) du premier étage de transmission (13, 13a) est également aussi l'élément de transmission du deuxième étage de transmission (17, 17a) et est réalisé à cet effet au niveau d'une première portion (12.1, 12a.1) de manière à coopérer avec la vis sans fin (7.1) et au niveau d'au moins une deuxième portion (15, 12a.2) de manière à coopérer avec un élément de transmission (16) du deuxième étage de transmission (17, 17a).

7. Entraînement auxiliaire selon la revendication 6, **caractérisé en ce que** l'élément de transmission de type roue à denture hélicoïdale (12) du premier étage de transmission (13) et l'élément de transmission (15) de type roue dentée du deuxième étage de transmission (17) disposé sur le même axe que celui-ci sont connectés pour former une seule unité ou sont fabriqués d'une seule pièce.

8. Entraînement auxiliaire selon l'une quelconque des revendications précédentes, **caractérisé en ce que** l'élément de transmission de type roue à denture hélicoïdale (12) du premier étage de transmission (13) et l'élément de transmission (15) du deuxième étage de transmission (17) connecté à celui-ci par entraînement ou la première portion (12.1, 12a.1) et la deuxième portion (15, 12a.2) de l'élément de transmission de type roue à denture hélicoïdale (12a) présentent un diamètre ou un rayon différent, par exemple de telle sorte que l'élément de transmission de type roue à denture hélicoïdale (12) possède un plus grand diamètre ou rayon que l'élément de transmission (15) du deuxième étage de transmission disposé sur le même axe que cet élément de transmission (12) ou que la première portion (12a.1) de l'élément de transmission de type roue à denture hélicoïdale (12a) présente un diamètre ou un rayon plus grand que la deuxième portion (12a.2).

9. Entraînement auxiliaire selon l'une quelconque des revendications précédentes, **caractérisé en ce que** le rapport de transmission du deuxième étage de transmission (17) est inférieur à 1, de préférence est compris entre 0,6 et 0,7.

10. Entraînement auxiliaire selon l'une quelconque des revendications précédentes, **caractérisé en ce qu'**au moins un élément de transmission (12a, 16) du premier et/ou du deuxième étage de transmission (13a, 17, 17a) est réalisé sous forme de segment.

11. Entraînement auxiliaire selon la revendication 10, **caractérisé en ce que** l'élément de transmission (12a) coopérant avec la vis sans fin (7.1) du premier étage de transmission (13a) et/ou l'élément de transmission (16) prévu à la sortie du deuxième étage de transmission (17) et/ou l'élément de transmission (12a) du deuxième étage de transmission (17a), qui coopère avec l'élément de transmission (16) à la sortie de cet étage de transmission (17a), sont réalisés sous forme de segments.

12. Entraînement auxiliaire selon l'une quelconque des revendications précédentes, **caractérisé en ce que** l'axe de l'élément de transmission de type roue à denture hélicoïdale (12, 12a) est disposé parallèlement à l'axe de l'arbre de sortie (4) et à distance de celui-ci, et **en ce que** la vis sans fin (7.1) du premier étage de transmission (13, 13a) ou la longueur partielle de l'arbre d'induit (7) du moteur électrique (2) présentant cette vis sans fin (7.1) est disposée entre l'arbre de sortie (4) ou une portion de palier (11.1.1) formée sur le boîtier de transmission (11) pour l'arbre de sortie (4) et l'élément de transmission de type roue à denture hélicoïdale (12, 12a) du premier étage de transmission (13, 13a).

13. Entraînement auxiliaire selon l'une quelconque des revendications précédentes, **caractérisé en ce que** la vis sans fin (7.1) du premier étage de transmission (13, 13a) ou une longueur partielle de l'arbre d'induit (7) présentant cette vis sans fin est orientée avec son étendue longitudinale perpendiculairement ou essentiellement perpendiculairement à un plan (E) qui inclut l'axe de l'arbre de sortie (4) ainsi que l'axe de l'élément de transmission de type roue à denture hélicoïdale (12, 12a) du premier étage de transmission (13, 13a).

14. Entraînement auxiliaire selon l'une quelconque des revendications précédentes, **caractérisé en ce qu'**un élément de transmission (16) du deuxième étage de transmission (17) chevauche partiellement l'élément de transmission de type roue à denture hélicoïdale (12) du premier étage de transmission (13).

15. Entraînement auxiliaire selon l'une quelconque des revendications précédentes, **caractérisé en ce que** l'arbre de sortie (4) ainsi que l'élément de transmission de type roue à denture hélicoïdale (12, 12a) du premier étage de transmission (13, 13a) et les éléments de transmission (12a, 15, 16) du deuxième étage de transmission (17, 17a) sont montés sur un fond (11.1) du boîtier de transmission (11) réalisé sous forme de cuve ou de demi-coque.

16. Entraînement auxiliaire selon l'une quelconque des revendications précédentes, **caractérisé en ce qu'**au moins un élément de commande coopérant avec la commande de moteur électrique ou électronique (2.1) pour commander le moteur électrique (2) en fonction de la position de rotation ou de pivotement de l'élément de transmission (15) est prévu sur un élément de transmission (15), par exemple sur l'élément de transmission (15) du deuxième étage de transmission (17) disposé avec son axe parallèle à l'élément de transmission de type roue à denture hélicoïdale (12), par exemple sous la forme d'un aimant permanent (21) et/ou sous la forme d'un agencement d'aimants permanents et/ou sous la forme de cames de commande et/ou de courbes.

17. Entraînement auxiliaire selon l'une quelconque des revendications précédentes, **caractérisé en ce que** le boîtier de moteur (11) est fermé au niveau de son côté de boîtier opposé au fond de boîtier (11.1) par un couvercle de boîtier (20), et **en ce que** la commande de moteur électrique ou électronique (2.1) est prévue sur le couvercle de boîtier (20).
